# EUROPÄISCHE PATENTSCHRIFT

(11) **EP 0 505 939 B1**
(45) Veröffentlichungstag und Bekanntmachung des Hinweises auf die Patenterteilung: **11.10.1995**
(21) Anmeldenummer: 92104868.2
(22) Anmeldetag: 20.03.1992
(51) Int. Cl.: C08F 8/28, C08F 16/38

(54) **Oxoacetale von Polyvinylalkoholen, Verfahren zu ihrer Herstellung und ihre Verwendung**
Oxo-acetals of polyvinyl alcohols, process for their manufacture and use thereof
Oxo-acétals d'alcools polyvinyliques, leur procédé de préparation et leur application

(30) Priorität: 25.03.1991 DE 4109739
(43) Veröffentlichungstag der Anmeldung: 30.09.1992
(73) Patentinhaber: HOECHST AKTIENGESELLSCHAFT, 65926 Frankfurt am Main (DE)
(72) Erfinder: Kroggel, Matthias, Dr., W-6233 Kelkheim (DE)

(56) Entgegenhaltungen:
- EP-A- 0 211 818
- EP-A- 0 376 196
- DE-A- 2 337 828
- DE-A- 3 714 276
- US-A- 4 357 402

## Beschreibung

Die Erfindung betrifft Acetale des Polyvinylalkohols, die Oxoacetaleinheiten enthalten und aus Polyvinylalkoholen durch Acetalisierung mit ketogruppenhaltigen Aldehyden (Oxoalkanalen) oder mit niedermolekularen Acetalen von Oxoalkanalen durch Umacetalisierung erhältlich sind. Die Herstellung der Oxoacetale von Polyvinylalkoholen aus den Ausgangskomponenten erfolgt vorzugsweise in wäßrigen oder organischen Medien unter Säurekatalyse. Die Polyvinyloxoacetale lassen sich über ihre Ketogruppen mit Hydrazin oder mehrfachfunktionellen Hydrazinderivaten oder mehrfachfunktionellen Carbonsäuresäurehydraziden zu Produkten mit variablem Eigenschaftsspektrum vernetzen.

Die Vernetzung von Polymeren, die in ihren Makromolekülen Vinylalkoholeinheiten enthalten, wie z. B. Polyvinylalkohole, copolymere Polyvinylalkohole und Polyvinylacetale, kann bekanntlich durch Umsetzung ihrer vinylalkoholischen Hydroxylgruppen mit gegenüber OH-Gruppen mehrfachreaktiven Verbindungen, beispielsweise mehrfachfunktionellen Isocyanaten, Epoxiden, Carbonsäureanhydriden, Carbonsäurehalogeniden oder Alkylhalogeniden, erfolgen. Nachteilig ist bei diesen Vernetzungsagenzien, daß sie in wäßrigen Medien nicht bzw. nur beschränkt einsetzbar sind, was insbesondere bei den wasserlöslichen Polyvinylalkoholen und Polyvinylacetalen zu erheblichen Problemen führen kann. Darüber hinaus sind zur Durchführung der Vernetzungsreaktionen in manchen Fällen erhöhte Temperaturen oder bei halogenhaltigen Vernetzern basische Verbindungen zum Abfangen und Neutralisieren der bei der Vernetzungsreaktion entstehenden Halogenwasserstoffe erforderlich.

Der vorliegenden Erfindung lag somit die Aufgabe zugrunde, modifizierte Polyvinylalkohole und Polyvinylacetale verfügbar zu machen, die ohne die vorstehend genannten Nachteile vernetzbar und technisch vorteilhaft verwendbar sind und ein verbreitertes Anwendungsgebiet abdecken können.

Dieses Ziel kann gemäß vorliegender Erfindung mit Acetalen des Polyvinylalkohols (PVAL) erreicht werden, deren Makromoleküle Vinylalkoholoxoacetaleinheiten enthalten und aus Polyvinylalkoholen durch Acetalisierung mit Aldehyden, die Ketogruppen enthalten, d. h. mit Oxoalkanalen, oder mit niedermolekularen Acetalen von Oxoalkanalen durch Umacetalisierung erhältlich sind. Erfindungsgemäße Polyvinyloxoacetale lassen sich über ihre Ketogruppen mit Hydrazin oder mehrfachfunktionellen Hydrazinderivaten oder mehrfachfunktionellen Carbonsäurehydraziden vernetzen, wobei die Vernetzung vollständig oder partiell bzw. abgestuft erfolgen und den jeweiligen Erfordernissen angepaßt werden kann. Diese Vernetzungsreaktionen sind je nach Löslichkeit der die Oxoacetaleinheiten enthaltenden Polyvinylacetale in wäßrigem oder in organischem Medium oder gegebenenfalls in Substanz bei normaler Temperatur durchführbar und es entsteht als niedermolekulares Nebenprodukt bei der Vernetzung lediglich Wasser.

Gegenstand der Erfindung sind daher Acetale des Polyvinylalkohols (PVAL), dadurch gekennzeichnet, daß deren Makromoleküle Einheiten der Formel I, 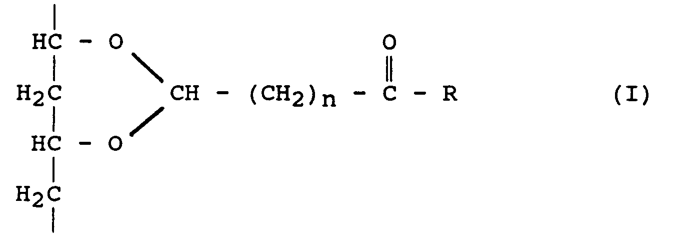
worin
- R =: (C₁-C₂₀)-Alkyl, vorzugsweise (C₁-C₄)-Alkyl, insbesondere Methyl, (C₆-C₂₀)-Aryl, -Aralkyl oder -Alkaryl, vorzugsweise Phenyl, oder (C₅-C₂₀)-Cycloalkyl, vorzugsweise Cyclohexyl, und n = eine Zahl von 1 bis 10, vorzugsweise 1, bedeuten,
enthalten.

Erfindungsgemäß beträgt der Gehalt an Ketogruppen (〉C=O) in den die Vinylalkoholoxoacetaleinheiten der Formel I enthaltenden Polyvinylacetalen vorzugsweise mindestens 0,05 Gew.-%, insbesondere 0,1 bis 16 Gew.-%, besonders bevorzugt 0,25 bis 12 Gew.-%, bezogen auf das Gewicht des Polyvinylacetals.

In den erfindungsgemäßen ketogruppenhaltigen Polyvinylacetalen sind vorzugsweise höchstens 86 Mol-%, insbesondere bis zu 80 Mol-%, Vinylalkoholeinheiten, bezogen auf den Gesamtgehalt an Vinylalkoholeinheiten in dem Ausgangs-PVAL, acetalisiert.

Das Molekulargewicht des Ausgangs-PVAL-s liegt vorzugsweise im Bereich von 2000 bis 300000 g/Mol, insbesondere 10000 bis 225000 g/Mol, ermittelt nach üblichen literaturbekannten Methoden.

Der Ausgangs-PVAL enthält ferner vorzugsweise mehr als 50 Mol-%, insbesondere mehr als 75 Mol-%, Vinylalkoholeinheiten, bezogen auf die Gesamtmolzahl aller Monomereinheiten in dem Ausgangs-PVAL.

Die erfindungsgemäßen ketogruppenhaltigen Polyvinylacetale können neben den Vinylacetalmonomereinheiten der Formel I noch andere Vinylacetaleinheiten, vorzugsweise ketogruppenfreie aliphatische, aromatische, araliphatische oder cycloaliphatische Vinylacetaleinheiten, enthalten. Bevorzugte ketogruppenfreie Vinylacetaleinheiten sind insbesondere abgeleitet aus der Gruppe aliphatischer (C₁-C₂₀)-Aldehyde, vorzugsweise Formaldehyd, Acetaldehyd, Propionaldehyd, Butyraldehyd, Isononanaldehyd, aliphatischer (C₂-C₂₀)-Hydroxyaldehyde, aliphatischer (C₂-C₂₀)-Alkoxyaldehyde oder Cycloalkoxyaldehyde, Cyclohexylaldehyd und Benzaldehyd, besonders bevorzugt aliphatischer (C₁-C₆)-Aldehyde und Benzaldehyd.

Der vorzugsweise zur Herstellung erfindungsgemäßer ketogruppenhaltiger Polyvinylacetale verwendete Ausgangs-PVAL wird insbesondere erhalten durch partielle oder vollständige Alkoholyse bzw. Verseifung von Polyvinylestern oder Polyvinylestercopolymerisaten, die Carbonsäurevinylestereinheiten mit 3 bis 20 C-Atomen enthalten, vorzugsweise von Polyvinylacetat oder von Ethylen/Vinylacetat-Copolymerisaten.

Gegenstand der Erfindung ist ferner ein Verfahren zur Herstellung von Oxoacetaleinheiten der Formel I enthaltenden Acetalen von Polyvinylalkoholen nach üblichen Methoden der Polyvinylacetalherstellung unter Säurekatalyse, dadurch gekennzeichnet, daß man Polyvinylalkohole in wäßrigem Medium oder in wäßrig-organischem Medium oder in organischem Medium unter Zusatz eines Säurekatalysators mit der stöchiometrisch erforderlichen Menge eines Ketoaldehyds der Formel II, 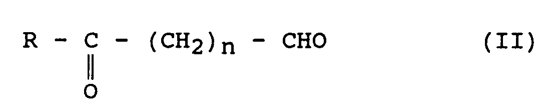
worin R und n die Bedeutung wie in Formel I haben,
oder eines Ketoaldehydacetals der Formel III, 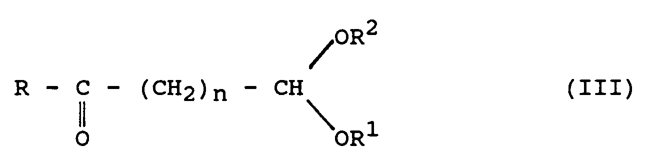
worin R und n die Bedeutung wie in Formel I haben und R¹, R², die gleich oder verschieden sein können und vorzugsweise gleich sind, (C₁-C₁₂)-Alkyl, vorzugsweise (C₁-C₅)-Alkyl, (C₅-C₁₂)-Cycloalkyl, (C₆-C₁₂)-Aryl oder -Alkaryl, besonders bevorzugt Methyl, Ethyl, i-Propyl, Butyl, bedeuten, sowie gegebenenfalls mit weiteren Aldehyden oder Aldehydacetalen unter Acetalisierungsbedingungen umsetzt und die Polyvinylacetale isoliert

Beim Einsatz von niedermolekularen Acetalen der Formel III müssen die zugrunde liegenden und der Formel II entsprechenden Aldehyde zunächst durch Behandlung mit Säuren, vorzugsweise bei erhöhter Temperatur, aus ihren Acetalen freigesetzt werden, was vorzugsweise in der Reaktionsmischung mit dem Polyvinylalkohol und dem Säurekatalysator unter den für die Acetalisierung des PVAL-s einzuhaltenden Acetalisierungsbedingungen in situ direkt und leicht erfolgen kann.

Bei der bevorzugten Durchführung der Polyvinylacetalsynthese in Lösung wird vorzugsweise Wasser als Lösungsmittel verwendet. In manchen Fällen können auch Gemische von Wasser mit wassermischbaren Lösungsmitteln, vorzugsweise mit niederen Alkoholen, Tetrahydrofuran oder Dioxan, verwendet werden. Es ist aber auch möglich, die Acetalisierung als Heterogenreaktion durchzuführen, wobei der Polyvinylalkohol, vorzugweise in feinteiliger Form, in einem organischen Lösungsmittel oder einem Lösungsmittelgemisch aufgeschlämmt bzw. suspendiert bzw. dispergiert wird. Geeignete Lösungsmittel hierfür sind vorzugsweise flüssige Alkanole der Formel CₙH₂ₙ₊₁OH, insbesondere Methanol, Ethanol, Propanol, Butanol, ferner Tetrahydrofuran, Methylenchlorid, Chloroform, Dioxan, Toluol, Xylol, Benzol, Paraffinöl und andere.

Bei der Acetalisierung von PVAL-en in wäßriger Lösung werden die Oxoaldehyde bzw. Oxoalkanale der Formel II bzw. ihre niedermolekularen Acetale der Formel III unter dem katalytischen Einfluß von Säuren mit PVAL-en zu entsprechenden Polyvinylacetalen umgesetzt. Hierbei ist es möglich, entweder die Säure dem PVAL-Aldehyd- bzw. PVAL-niedermolekulares Acetal-Gemisch, oder den Aldehyd bzw. dessen niedermolekulares Acetal dem PVAL-Säure-Gemisch zuzudosieren. Auch Eintopfreaktionen sind durchführbar, können aber insbesondere bei Produkten mit hohem Acetalisierungsgrad zum Verklumpen des Endproduktes führen.

Als Säurekatalysatoren sind grundsätzlich alle Säuren einsetzbar, die für die Herstellung bekannter Polyvinylacetale verwendbar sind. Bevorzugt sind Mineralsäuren, insbesondere Salzsäure, Schwefelsäure, Salpetersäure, Phosphorsäure, Amidosulfonsäure. Darüber hinaus können die Oxoaldehyde der Formel II bzw. die niedermolekularen Acetale der Formel III auch in Mischung mit anderen Aldehyden bzw. deren niedermolekularen Acetalen zur Acetalisierung eingesetzt werden. Als ketogruppenfreie Aldehyde lassen sich vorzugsweise lineare und/oder verzweigte aliphatische und/oder cycloaliphatische und/oder aromatische Aldehyde mit 1 bis 20 C-Atomen einsetzen, insbesondere aliphatische Aldehyde der Formel CₙH₂ₙO, mit n = 1 bis 20, wobei Aldehyde aus der Gruppe Formaldehyd, Acetaldehyd, Propionaldehyd, Valerianaldehyd und Isononanaldehyd sowie gegebenenfalls Derivate dieser Aldehyde bevorzugt sind. Besonders bevorzugt ist Butyraldehyd. Ebenfalls bevorzugt sind Benzaldehyd und Derivate des Benzaldehyds. Auch die Verwendung von Hydroxyaldehyden kann in manchen Fällen vorteilhaft sein. Auch Aldehydgemische bzw. Gemische aus Aldehyden und niedermolekularen Aldehydacetalen sind verwendbar. Auch die Mitverwendung von Emulgatoren bei der Durchführung der Acetalisierungsreaktion kann in manchen Fällen vorteilhaft sein. Als geeignete Emulgatoren kommen vorzugsweise (C₈-C₂₀)-Alkansulfonsäuren, fluorierte langkettige Fettsäuren, fluorierte langkettige Sulfonsäuren, langkettige Alkylsulfosuccinatester infrage, wobei die genannten tensioaktiven starken Säuren gleichzeitig auch als Säurekatalysatoren die Acetalisierungsreaktion katalysieren können.

Als Ausgangs-Polyvinylalkohole (Ausgangs-PVAL-e) für die Acetalisierung sind grundsätzlich alle Polymerisate und Copolymerisate geeignet, die in ihren Makromolekülen Vinylalkoholeinheiten enthalten. Als solche sind vorzugsweise folgende verwendbar:
Teil- und vollverseifte Polyvinylester, teil- und vollverseifte Vinylester-Comonomer-Copolymerisate, wobei die Comonomereinheiten vorzugsweise ausgewählt sind aus der Gruppe (Meth)Acrylsäure, (Meth)Acrylester, N-Vinylpyrrolidon, Ethylen, α-Olefine mit 3 bis 20 C-Atomen, (Meth)Acrylamid und (Meth)Acrylamidderivate, Crotonsäure, Maleinsäure, Mesaconsäure, Itaconsäure und Ester dieser Säuren, Styrol und Styrolderivate, Acrylnitril.

Besonders bevorzugt ist die Acetalisierung von teil- und vollverseiften Polyvinylestern, wobei diese, insbesondere die teilverseiften Polyvinylester, gegebenenfalls noch unterschiedliche Anteile an restlichen nichtverseiften Carbonsäurevinylestereinheiten mit 3 bis 20 C-Atomen enthalten, insbesondere von teil- und vollverseiften Polyvinylacetaten, Polyvinylpropionaten oder Copolyvinylestern des Vinylacetats und Vinylpropionats. Vorteilhaft ist dabei in allen Fällen ein möglichst hoher Gehalt an acetalisierbaren Vinylalkoholeinheiten in den PVAL-en. Bevorzugt sind daher PVAL-e mit einem Vinylalkoholeinheitengehalt von mehr als 50 Mol-%, insbesondere mehr als 75 Mol-%, bezogen auf die Gesamtmolzahl aller Monomereinheiten in den Polymerisatmolekülen.

Alle derartigen und, wie vorstehend beschrieben, Vinylalkoholeinheiten enthaltenden Polymerisate werden in der vorliegenden Beschreibung erfindungsgemäß ganz allgemein als Polyvinylalkohole (PVAL-e) bzw. Ausgangs-PVAL-e bezeichnet.

Die gewichtsmittleren Molekulargewichte der zur Acetalisierung einsetzbaren Ausgangs-PVAL-e unterliegen prinzipiell nach oben keiner Beschränkung. Bevorzugt werden aber PVAL-e mit Molekulargewichten im Bereich von 2000 bis 300000 g/Mol, insbesondere von 10000 bis 225000 g/Mol, eingesetzt.

Zur Herstellung der Polyvinylacetale in wäßrigen Lösungen werden die zu acetalisierenden PVAL-e in vorzugsweise heißem Wasser bei Temperaturen von vorzugsweise 80 bis 100 °C gelöst, auf PVAL-Konzentrationen von vorzugsweise 1 bis 40 Gew.-%, insbesondere 5 bis 25 Gew.-%, bezogen auf die wäßrige PVAL-Lösung, eingestellt, auf die vorgesehene Acetalisierungstemperatur gebracht und unter Anwendung üblicher Acetalisierungsmethoden erfindungsgemäß acetalisiert. Dabei können der Aldehyd oder die Aldehydmischung oder das niedermolekulare Acetal bzw. die Acetalmischung oder eine niedermolekulare Acetal-Aldehyd-Mischung einer vorgelegten säurehaltigen PVAL-Lösung zudosiert oder aber der Säurekatalysator einer vorgelegten Mischung aus PVAL-Lösung und Aldehyd oder aus PVAL-Lösung und niedermolekularem Acetal unter Rühren und gegebenenfalls Schutzgasatmosphäre zudosiert werden. Die Zudosierung kann vorzugsweise innerhalb von 5 Minuten bis 10 Stunden erfolgen, wobei starkes Rühren vorteilhaft ist.

Die Acetalisierungsreaktion kann auch als Batch-Reaktion durchgeführt werden. Die Menge der zuzusetzenden Aldehyde bzw. ihrer niedermolekularen Acetale richtet sich nach dem angestrebten Acetalisierungsgrad des PVAL-s. Der stöchiometrische Bedarf beträgt bekanntlich 1/2 Mol Aldehyd oder niedermolekulares Aldehydacetal pro Mol zu acetalisierende Vinylalkoholeinheit. Dabei wird aufgrund eines im allgemeinen nicht vollständigen Umsatzes der Aldehyd bzw. das niedermolekulare Aldehydacetal vorzugsweise in einem stöchiometrischen Überschuß von bis zu 10 Mol-%, insbesondere bis zu 2 Mol-%, bezogen auf die Molzahl der zu verwendenden Menge an Aldehyd bzw. niedermolekularem Aldehydacetal, eingesetzt.

Zur Durchführung der Acetalisierung in Wasser oder in Wasser-Alkohol-Gemischen wird bei Verwendung von Aldehyden die Reaktion vorzugsweise bei Temperaturen zwischen 0 und 10 °C in Gang gesetzt, während bei Verwendung von niedermolekularen Aldehydacetalen Reaktionstemperaturen im Bereich von 25 bis 50 °C bevorzugt sind, um die rasche Spaltung des niedermolekularen Aldehydacetals in Aldehyd und Alkohol zu gewährleisten. Zur Vervollständigung der Acetalisierungsreaktion ist in allen Fällen eine Nachreaktion bei höheren Temperaturen, vorzugsweise im Bereich zwischen 20 und 70 °C, vorteilhaft. Grundsätzlich ist bei Verwendung von Aldehyden die Acetalisierungsreaktion auch ohne eine vorgeschaltete Kühlphase durchführbar.

Die zu verwendende Menge an Säurekatalysator wird insbesondere durch den angestrebten Acetalisierungsgrad bestimmt und beträgt vorzugsweise bis zu 1,1 Mol-Äquivalent, bezogen auf den molaren Vinylalkoholeinheitengehalt des PVAL-s. Bei hohen Acetalisierungsgraden fallen die Acetale des PVAL-s während der Reaktion in wäßriger Phase in vorzugsweise feinteiliger Form aus und können abgesaugt, mit schwach alkalischem Wasser gewaschen, gegebenenfalls neutral gewaschen, und getrocknet werden. Acetalisierungsprodukte des PVAL-s, die bei der Acetalisierungsreaktion in wäßriger Phase nicht ausfallen, was vorzugsweise bei niederen Acetalisierungsgraden der Fall sein kann, können durch Zusatz von vorzugsweise flüssigen Fällungsmitteln ausgefällt und isoliert werden. Geeignete Fällungsmittel sind vorzugsweise mit Wasser mischbare organische Lösungsmittel, beispielsweise insbesondere Tetrahydrofuran, Dioxan, Aceton, Methanol, Ethanol, Propanol, Butanol.

Die Acetalisierung der PVAL-e ist grundsätzlich auch in organischen Lösungsmitteln unter Acetalisierungsbedingungen durchführbar. Mit PVAL-en, die in den ausgewählten Lösungsmitteln unlöslich sind, wird sie als Zweiphasenreaktion (Heterogenreaktion) und mit PVAL-en, die in den ausgewählten Lösungsmitteln löslich sind, als Einphasenreaktion durchgeführt. Für die Acetalisierung in organischen Lösungsmitteln sind grundsätzlich alle Lösungsmittel und Säurekatalysatoren einsetzbar, die für die Synthese von bekannten Polyvinylacetalen als verwendbar bekannt sind. Bevorzugte Lösungsmittel sind z. B. Xylole, Toluol, Chloroform, Methylenchlorid, insbesondere aber auch mit Wasser mischbare Lösungsmittel, vorzugsweise flüssige Alkohole der Formel CₙH₂ₙ₊₁OH, besonders bevorzugt Ethanol, Methanol, Propanol. Als Säurekatalysatoren werden bevorzugt Sulfonsäuren, z. B. Toluolsulfonsäuren, Trifluoressigsäure, Mineralsäuren, z. B. Schwefelsäure, sowie gegebenenfalls verschiedene weitere wenig flüchtige starke organische oder anorganische Säuren verwendet.

Die Durchführung der Acetalisierung in organischen Lösungsmitteln erfolgt bevorzugt in der Weise, daß der Säurekatalysator, der Aldehyd bzw. das niedermolekulare Aldehydacetal und der PVAL in dem Lösungsmittel aufgeschlämmt bzw. suspendiert bzw. dispergiert oder gelöst werden und das Gemisch dann auf Rückflußtemperatur erhitzt und solange unter Rückfluß gehalten wird, bis sich im Wasserabscheider des Rückflußkühlers kein Wasser mehr abscheidet. Es kann in manchen Fällen vorteilhaft sein, daß man die Aldehydkomponente nicht vorlegt, sondern sie während eines gewissen Zeitraums dem am Rückfluß siedenden Reaktionsgemisch zudosiert.

Bei der Acetalisierung in organischen Lösungsmitteln gehen die in dem Lösungsmittel unlöslichen Ausgangs-PVAL-e im allgemeinen mit fortschreitender Acetalisierung und steigendem Acetalisierungsgrad in Lösung, vorausgesetzt, daß die entstehenden Acetalisierungsprodukte in dem Lösungsmittel löslich sind. Bei der Acetalisierung in organischen Lösungsmitteln können die Oxoaldehyde der Formel II bzw. deren niedermolekulare Acetale der Formel III auch in Mischung mit ketogruppenfreien Aldehyden bzw. deren niedermolekularen Acetalen zur Acetalisierung eingesetzt werden. Als ketogruppenfreie Aldehyde werden bevorzugt lineare oder verzweigte aliphatische oder cycloaliphatische oder aromatische Aldehyde mit 1 bis 20 C-Atomen verwendet. Besonders bevorzugt sind aliphatische Aldehyde der Formel CₙH₂ₙO, mit n = 1 bis 20, insbesondere z. B. Formaldehyd, Acetaldehyd, Propionaldehyd, Isononanaldehyd sowie gegebenenfalls Derivate dieser Aldehyde. Besonders bevorzugt ist Butyraldehyd. Ebenfalls bevorzugt sind Benzaldehyd, Derivate des Benzaldehyds sowie aliphatische (C₂-C₂₀)-Hydroxyaldehyde.

Die Zudosierung der zu verwendenden Aldehyde bzw. ihrer niedermolekularen Acetale in die Reaktionsmischung kann sowohl als Gemisch als auch einzeln gleichzeitig oder einzeln nacheinander erfolgen. Geht das polymere Acetalisierungsprodukt im Verlauf der Acetalisierungsreaktion in dem organischen Lösungsmittel in Lösung, so kann es nach dem Reaktionsende durch Zusatz von geeigneten flüssigen organischen Fällungsmitteln, wie z. B. Aceton, Pentan, Hexan, Heptan, oder durch Eingießen der Reaktionsmischung in eiskaltes Wasser oder eiskalte Wasser/Alkohol- bzw. Wasser/Aceton-Gemische gefällt, abgesaugt, mit schwach alkalischem Wasser (p_{H} 9 - 12) gewaschen und gegebenenfalls neutral gewaschen und getrocknet werden. Grundsätzlich ist eine Isolierung der in organischen Lösungsmitteln gelösten Acetalisierungsprodukte auch durch Abdestillieren des Lösungsmittels möglich.

Bei den zur Acetalisierung eingesetzten PVAL-en sind grundsätzlich vorzugsweise bis zu 86 Mol-% der in dem PVAL vorhandenen Vinylalkoholeinheiten acetalisierbar, besonders bevorzugt ist dabei die Acetalisierung von bis zu 80 Mol-% der vorhandenen Vinylalkoholeinheiten, jeweils bezogen auf die in dem Ausgangs-PVAL vorhandene Gesamtmenge an acetalisierbaren Vinylalkoholeinheiten. Der gewichtsprozentuale Anteil an Ketogruppen (〉C=O) in den erfindungsgemäßen Oxoacetalen von PVAL-en beträgt vorzugsweise mindestens 0,05 Gew.-%, insbesondere 0,1 bis 16 Gew.-% und besonders bevorzugt 0,25 bis 12 Gew.-% 〉C=O, bezogen auf das Gewicht des erfindungsgemäßen Polyvinylacetals. Die Bestimmung des Ketogruppengehaltes in den Ketogruppen enthaltenden polymeren Acetalen kann nach bekannten Methoden, beispielsweise durch Oximtitration, erfolgen.

Wird die Acetalisierung von PVAL-en als Mischacetalisierung unter Verwendung von ketogruppenhaltigen und ketogruppenfreien Aldehyden bzw. deren niedermolekularen Acetalen durchgeführt, dann sollte das molare Verhältnis der eingesetzten ketogruppenhaltigen zu den ketogruppenfreien Aldehyden bzw. deren niedermolekularen Acetalen vorzugsweise 1:240 bis 240:1, insbesondere 1:180 bis 180:1 betragen.

Die erfindungsgemäß erhältlichen und Oxoacetaleinheiten enthaltenden Acetale von PVAL-en lassen sich über deren Ketogruppen vernetzen. Als Vernetzungsagenzien geeignet sind Verbindungen, die gegenüber Carbonylgruppen reaktive Gruppierungen besitzen. Zu dieser Art von Verbindungen zählen vorzugsweise aliphatische, cycloaliphatische und aromatische mehrfachfunktionelle Carbonsäurehydrazide mit 2 bis 20 C-Atomen, insbesondere bifunktionelle Säurehydrazide von aliphatischen Dicarbonsäuren der Formel H₂N-NH-CO-(CH₂)ₙ-CO-NH-NH₂, mit n = 0 bis 10, wie z. B. vorzugsweise die Dihydrazide der Oxalsäure, Malonsäure, Adipinsäure, Glutarsäure, oder von Derivaten dieser Dicarbonsäurehydrazide. Ferner eignen sich als Vernetzer bevorzugt Mehrfachhydrazide von mehrbasigen aromatischen Carbonsäuren. Bevorzugte Vernetzer sind ferner Hydrazin und mehrfachfunktionelle organische Hydrazinderivate, die mindestens 2 C-Atome enthalten. Durch die erfindungsgemäß erzielbaren Vernetzungen können aus den erfindungsgemäßen Oxoacetalgruppen enthaltenden Polyvinylacetalen hochvernetzte oder teilweise bis geringfügig vernetzte Produkte erhalten werden. Die Vernetzungen können stufenlos variabel gestaltet und dadurch u. a. die Löslichkeiten und verschiedene anwendungstechnische Produkteigenschaften der Polyvinylacetale entscheidend und vorteilhaft variiert werden, z. B. bei Verwendung der Produkte als polymere Bindemittelkomponenten in Pressmassen, Lacken, Anstrichfarben, Fasern, Papier, Holzschliff für Spanplatten, Beschichtungen, Klebstoffen, korrosionsschützenden Decklacken, etc. Die Anwendung erfindungsgemäßer Acetale kann dabei vorzugsweise in gelöster oder dispergierter Form zusammen mit den Vernetzungsagenzien erfolgen. Während oder vorzugsweise nach der Trocknung dieser Lösungen bzw. Dispersionen können die polymeren Produkte über ihre Ketogruppen vernetzen und die gewünschten schwerlöslichen und quellbaren oder unlöslichen und unquellbaren polymeren Modifikationen mit überraschend vorteilhaften Eigenschaften bilden.

Darüber hinaus lassen sich die erfindungsgemäß mit Ketoaldehyden acetalisierten Polyvinylacetale auch dadurch modifizieren, daß man sie an ihren Ketogruppen mit monofunktionellen aliphatischen, cycloaliphatischen oder aromatischen Carbonsäurehydraziden mit 2 bis 20 C-Atomen umsetzt. Besonders bevorzugt werden hierfür aliphatische Carbonsäurehydrazide der Formel H₃C-(CH₂)ₙ-CO-NH-NH₂, mit n = 0 bis 20, verwendet, insbesondere z. B.Ameisensäure, Essigsäure-, Propionsäure-, Buttersäure- und Valeriansäurehydrazid, sowie Derivate dieser Carbonsäurehydrazide. Die resultierenden Umsetzungsprodukte mit neuen Eigenschaftsvarianten eröffnen den Polyvinylacetalen neue Verwendungsmöglichkeiten.

Weitere Modifizierungsmöglichkeiten bestehen in der Umsetzung der Ketogruppen von erfindungsgemäß oxoacetalisierten Polyvinylalkoholen mit basischen Stickstoffverbindungen, vorzugsweise z. B. mit Hydroxylamin oder Hydroxylaminderivaten, ferner mit Hydrazinderivaten der Formel R-NH-NH₂, worin R einen Alkyl-, Cycloalkyl- oder Arylrest mit 1 bis 20 C-Atomen bedeutet. Beispiele für entsprechende Reaktanten sind vorzugsweise 2,4-Dinitrophenylhydrazin, oder aber Semicarbazid oder Semicarbazidderivate. Umsetzungsprodukte solcher Reaktanten mit den polymer gebundenen Ketoacetalgruppen eröffnen prinzipiell die Möglichkeit, Enzyme zu immobilisieren, oder aber z.B. pharmazeutische Wirkstoffe polymer zu binden.

Die Erfindung wird durch die nachstehenden Beispiele näher erläutert.

### Beispiel 1

In einem Reaktionsgefäß mit Rührwerk wird unter Stickstoffatmosphäre aus 800 g Wasser und 200 g Polyvinylalkohol (PVAL) bei 90 °C eine 20 gew.-%ige wäßrige PVAL-Lösung hergestellt. Der PVAL, erhalten durch Hydrolyse von Polyvinylacetat, zeigt in 4 gew.-%iger wäßriger Lösung bei 20 °C eine Viskosität von 10 mPa·s (gemessen im Höppler-Vlskosimeter nach DIN 53015) und hat einen Hydrolysegrad von 98,4 Mol-%. Die Lösung wird anschließend auf 45 °C abgekühlt, mit 5,88 g 3-Oxobutyraldehyddimethylacetal (= Verbindung der Formel III) und 0,44 g Jonol (= phenolischer Oxidationsstabilisator der Fa. Shell AG) versetzt, durch Zugabe einiger ml 20 gew.-%iger wäßriger Salzsäure auf p_{H} 3 eingestellt und anschließend 30 Minuten bei 45 °C gerührt. Nach dieser Zeit werden unter Rühren 300 ml 20 gew.-%ige wäßrige Salzsäure innerhalb von 1 Stunde dem Reaktionsgemisch bei einer Temperatur von 45 °C zugetropft und danach die Mischung bei 45 °C zur Vervollständigung der Reaktion noch 4 Stunden gerührt. Anschließend wird das Reaktionsgemisch auf Raumtemperatur abgekühlt, durch Zusatz von verdünnter wäßriger Natronlauge auf p_{H} 10 eingestellt, durch Eingießen in Methanol das Polyvinylacetal ausgefällt, von der flüssigen Phase abgesaugt, mit Methanol gewaschen und getrocknet.

Das erhaltene Polyvinylacetal hat folgende Kenndaten: Ketogruppengehalt: 0,6 Gew.-% 〉C=O, bezogen auf das Polyvinylacetal, ermittelt durch Titration (Oximtitration) nach literaturbekanntem Verfahren (vgl. Houben-Weyl, Methoden der Org. Chemie, Bd. II (1953), Seite 458); der aus der eingesetzten Menge an Oxoaldehyd theoretisch zu erwartende Wert liegt bei 0,6 Gew.-% 〉C=O.

Die Viskosität der 4 gew.-%igen wäßrigen Lösung des Polyvinylacetals bei 20 °C, ermittelt im Höppler-Viskosimeter nach DIN 53015, beträgt 7,71 mPa·s.

### Beispiel 2

Beispiel 1 wird wiederholt mit der Abänderung, daß anstelle von 5,88 g 3-Oxobutyraldehyddimethylacetal 11,76 g dieser Komponente eingesetzt werden. Das erhaltene Polyvinylacetal hat folgende Kenndaten:
Ketogruppengehalt: 1 Gew.-% 〉C=O, bezogen auf das Polyvinylacetal; der aus der eingesetzten Menge an Oxoaldehyd theoretisch zu erwartende Wert liegt bei 1,2 Gew.-% 〉C=O.

Die Viskosität der 4 gew.-%igen wäßrigen Lösung des Polyvinylacetals bei 20 °C beträgt 9,69 mPa·s.

### Beispiel 3

Analog Beispiel 1 wird aus 925 g Wasser und 75 g PVAL des Beispiels 1 bei 90 °C eine 7,5 gew.-%ige wäßrige PVAL-Lösung hergestellt. Die Lösung wird auf 40 °C abgekühlt und mit 112,5 ml 20 gew.-%iger wäßriger Salzsäure und 0,165 g Jonol versetzt. Anschließend werden der Lösung innerhalb von 4 Stunden 32,4 g 3-Oxobutyraldehyddimethylacetal zudosiert und danach unter weiterem Rühren bei 40 °C eine Nachreaktionsphase angeschlossen. Nachfolgend wird das Reaktionsgemisch auf Raumtemperatur abgekühlt, durch Zusatz von verdünnter wäßriger Natronlauge auf p_{H} 10 eingestellt, durch Eingießen in Methanol gefällt, das ausgefallene Polyvinylacetal abgesaugt, mit Methanol gewaschen und getrocknet.

Das erhaltene Polyvinylacetal hat folgende Kenndaten:
Ketogruppengehalt: 5,9 Gew.-% 〉C=O, bezogen auf das Polyvinylacetal; der aus der eingesetzten Menge an Oxoaldehyd theoretisch zu erwartende Wert liegt bei 7,5 Gew.-% 〉C=O.

Die Viskosität der 4 gew.-%igen Lösung des Polyvinylacetals in H₂O/Ethanol 3:7 (Vol.-Tl.) bei 20 °C beträgt 21,0 mPa·s.

### Beispiel 4

Beispiel 3 wird wiederholt mit der Abänderung, daß anstelle von 32,46 g 3-Oxobutyraldehyddimethylacetal 48,69 g dieser Komponente eingesetzt werden. Das erhaltene Polyvinylacetal hat folgende Kenndaten:
Ketogruppengehalt: 9 Gew.-% 〉C=O, bezogen auf das Polyvinylacetal; der aus der eingesetzten Menge an Oxoaldehyd theoretisch zu erwartende Wert liegt bei 10,3 Gew.-% 〉C=O.

Die Viskosität der 4 gew.-%igen Lösung des Polyvinylacetals in H₂O/Ethanol 1:1 (Vol.-Tl.) bei 20 °C beträgt 44,8 mPa·s.

### Beispiel 5

In einem Reaktionsgefäß wie in Beispiel 1 beschrieben wird unter Stickstoffatmosphäre aus 900 g Wasser und 100 g Polyvinylalkohol (PVAL) bei 90 °C eine 10 gew.-%ige wäßrige PVAL-Lösung hergestellt. Der PVAL, erhalten durch Hydrolyse von Polyvinylacetat, zeigt in 4 gew.-%iger wäßriger Lösung bei 20 °C eine Viskosität von 20 mPa·s (gemessen im Höppler-Viskosimeter nach DIN 53015) und hat einen Hydrolysegrad von 98,4 Mol-%. Die Lösung wird auf 45 °C abgekühlt, mit 5,88 g 3-Oxobutyraldehyddimethylacetal und 0,22 g Jonol versetzt, durch Zugabe einiger ml 20 gew.-%iger wäßriger Salzsäure auf p_{H} 3 eingestellt und anschließend 30 Minuten bei 45 °C gerührt. Nach dieser Zeit werden unter Rühren 150 ml 20 gew.-%ige wäßrige Salzsäure innerhalb von 30 Minuten dem Reaktionsgemisch zudosiert, das Gemisch auf 5 °C abgekühlt und innerhalb von 70 Minuten 54,54 g Butyraldehyd zudosiert, das Reaktionsgemisch danach bei 5 °C eine Stunde weiter gerührt und auf Raumtemperatur erwärmt. Das ausgefallene Polyvinylacetal wird abgesaugt, gründlich mit Methanol, dann mit 10 gew.-%iger methanolischer Natronlauge und danach wieder mit Methanol gewaschen und getrocknet.

Das resultierende Polyvinylacetal hat folgende Kenndaten, ermittelt mit ¹H- und ¹³C-NMR-Spektroskopie (verwendetes Lösungsmittel: d⁶-DMSO):
Ketogruppengehalt: 0,77 Gew.-% 〉C=O,
Gehalt an Vinylalkoholeinheiten: 21,2 Gew.-%,
Gehalt an Vinylbutyraleinheiten: 71,9 Gew.-%,
Gehalt an Vinylacetateinheiten: 2,7 Gew.-%,
Gehalt an Vinyl-3-oxobutyraleinheiten: 4,3 Gew.-%,
jeweils bezogen auf das Polyvinylacetal.

### Beispiel 6

Beispiel 5 wird wiederholt mit der Abänderung, daß anstelle von 5,88 g 3-Oxobutyraldehyddimethylacetal und 54,54 g Butyraldehyd 11,76 g 3-Oxobutyraldehyddimethylacetal und 51,34 g Butyraldehyd eingesetzt werden.

Das resultierende Polyvinylacetal hat folgende Kenndaten, ermittelt mit ¹H- und ¹³C-NMR-Spektroskopie (verwendetes Lösungsmittel: d⁶-DMSO):
Ketogruppengehalt: 1,3 Gew.-% 〉C=O,
Gehalt an Vinylalkoholeinheiten: 21,9 Gew.-%,
Gehalt an Vinylbutyraleinheiten: 68 Gew.-%,
Gehalt an Vinylacetateinheiten: 2,7 Gew.-%,
Gehalt an Vinyl-3-oxobutyraleinheiten: 7,4 Gew.-%,
jeweils bezogen auf das Polyvinylacetal.

### Beispiel 7

In einem Reaktionsgefäß mit Rührwerk und Rückflußkühler werden unter Stickstoffatmosphäre 250 g feinteiliger Polyvinylalkohol (PVAL) zusammen mit 48,8 g 3-Oxobutyraldehyddimethylacetal und 4,88 g p-Toluolsulfonsäure in 500 ml Methanol suspendiert bzw. gelöst und die Mischung unter fortlaufendem Rühren 6 Stunden auf Rückflußtemperatur erhitzt. Der eingesetzte PVAL, erhalten durch Hydrolyse von Polyvinylacetat, zeigt in 4 gew.-%iger wäßriger Lösung bei 20 °C eine Viskosität von 8 mPa·s (gemessen im Höppler-Viskosimeter nach DIN 53015) und hat einen Hydrolysegrad von 87,7 Mol-%. Das Reaktionsgemisch wird anschließend auf Raumtemperatur abgekühlt. Das resultierende und in Methanol nicht lösliche Polyvinylacetal wird abgesaugt, mit 10 gew.-%iger methanolischer Natronlauge und danach mit Methanol gewaschen und getrocknet. Es hat folgende Kenndaten:
Ketogruppengehalt: 2,6 Gew.-% 〉C=O, bezogen auf das Polyvinylacetal (ermittelt wie in Beispiel 1 beschrieben);
der aus der eingesetzten Menge an Oxoaldehyd theoretisch zu erwartende Wert liegt bei 3,8 Gew.-% 〉C=O.

## Patentansprüche (Patentansprüche für folgende(n) Vertragsstaat(en): AT, BE, CH, DE, FR, GB, IT, LI, NL, SE)

1. Acetale des Polyvinylalkohols (PVAL), dadurch gekennzeichnet, daß deren Makromoleküle Einheiten der Formel I, 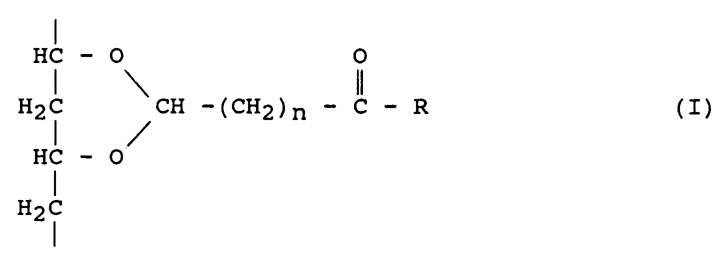 worin
R = (C₁-C₂₀)-Alkyl, vorzugsweise (C₁-C₄)-Alkyl, (C₆-C₂₀)-Aryl, -Aralkyl oder -Alkaryl, vorzugsweise Phenyl, oder (C₅-C₂₀)-Cycloalkyl, vorzugsweise Cyclohexyl, und
n = eine Zahl von 1 bis 10, vorzugsweise 1, bedeuten,
enthalten.

2. Acetale des PVAL-s nach Anspruch 1, dadurch gekennzeichnet, daß ihr Gehalt an Ketogruppen (〉C=O) mindestens 0,05 Gew.-%, vorzugsweise 0,1 bis 16 Gew.-%, bezogen auf das Gewicht des Polyvinylacetals, beträgt.

3. Acetale des PVAL-s nach Anspruch 1 oder 2, dadurch gekennzeichnet, daß höchstens 86 Mol-%, vorzugsweise bis zu 80 Mol-%, der Vinylalkoholeinheiten des PVAL-s, bezogen auf den Gesamtgehalt an Vinylalkoholeinheiten in dem Ausgangs-PVAL, acetalisiert sind.

4. Acetale des PVAL-s nach einem oder mehreren der Ansprüche 1 bis 3, dadurch gekennzeichnet, daß das Molekulargewicht des Ausgangs-PVAL-s im Bereich von 2000 bis 300000 g/Mol lag.

5. Acetale des PVAL-s nach einem oder mehreren der Ansprüche 1 bis 4, dadurch gekennzeichnet, daß der Gehalt an Vinylalkoholeinheiten in dem Ausgangs-PVAL mehr als 50 Mol-%, vorzugsweise mehr als 75 Mol-%, bezogen auf die Gesamtmolzahl aller Monomereinheiten in dem Ausgangs-PVAL, betrug.

6. Acetale des PVAL-s nach einem oder mehreren der Ansprüche 1 bis 5, dadurch gekennzeichnet, daß sie neben Vinylacetaleinheiten der Formel I andere Vinylacetaleinheiten enthalten.

7. Acetale des PVAL-s nach Anspruch 6, dadurch gekennzeichnet, daß sie ketogruppenfreie Vinylacetaleinheiten, abgeleitet aus der Gruppe aliphatischer (C₁-C₂₀)-Aldehyde, aliphatischer (C₂-C₂₀)-Hydroxyaldehyde, aliphatischer (C₂-C₂₀)-Alkoxyaldehyde oder Cycloalkoxyaldehyde, Cyclohexylaldehyd und Benzaldehyd, enthalten.

8. Acetale des PVAL-s nach einem oder mehreren der Ansprüche 1 bis 7, dadurch gekennzeichnet, daß der Ausgangs-PVAL durch partielle oder vollständige Alkoholyse bzw. Verseifung von Polyvinylestern oder Polyvinylestercopolymerisaten, die Carbonsäurevinylestereinheiten mit 3 bis 20 C-Atomen enthalten, vorzugsweise Polyvinylacetat oder Ethylen/Vinylacetat-Copolymerisaten, erhalten wurde.

9. Acetale des PVAL-s nach einem oder mehreren der Ansprüche 1 bis 8, dadurch gekennzeichnet, daß sie Carbonsäurevinylestereinheiten mit 3 bis 20 C-Atomen, vorzugsweise Vinylacetateinheiten, enthalten.

10. Verfahren zur Herstellung von Oxoacetaleinheiten der Formel I enthaltenden Acetalen von Polyvinylalkoholen nach Anspruch 1 aus PVAL-en und Aldehyden unter Säurekatalyse in wäßrigem oder organischem Medium, dadurch gekennzeichnet, daß man Polyvinylalkohole in wäßrigem Medium oder in wäßrig-organischem Medium oder in organischem Medium unter Zusatz eines Säurekatalysators mit der stöchiometrisch erforderlichen Menge eines Ketoaldehyds der Formel II, 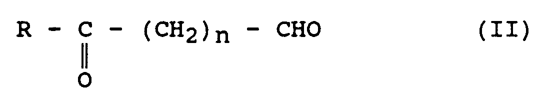 worin R und n die Bedeutung wie in Formel I haben,
oder eines Ketoaldehydacetals der Formel III, 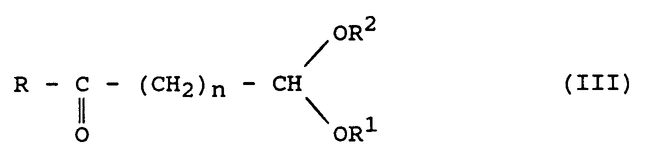 worin R und n die Bedeutung wie in Formel I haben und R¹, R², die gleich oder verschieden sein können, (C₁-C₁₂)-Alkyl, (C₅-C₁₂)-Cycloalkyl, (C₆-C₁₂)-Aryl oder -Alkaryl, bedeuten, sowie gegebenenfalls mit weiteren Aldehyden oder Aldehydacetalen unter Acetalisierungsbedingungen umsetzt und die Polyvinylacetale isoliert.

11. Verwendung von Polyvinylacetalen nach Ansprüchen 1 bis 9, bzw. hergestellt nach Anspruch 10, in Kombination oder in Mischung mit ausgewählten Mengen von Verbindungen aus der Gruppe Hydrazin, monofunktionelle organische Hydrazinderivate, mehrfachfunktionelle organische Hydrazinderivate, monofunktionelle Carbonsäurehydrazide, mehrfachfunktionelle Carbonsäurehydrazide, Hydroxylamin, organische Hydroxylaminderivate, Semicarbazid, organische Semicarbazidderivate, vorzugsweise zur Herstellung von in gelöster oder dispergierter Form anwendbaren vernetzbaren polymeren Bindemitteln für Pressmassen, Lacke, Anstrichfarben, Fasern, Papier, Holzschliff, Beschichtungen, Klebstoffe, korrosionsschützende Decklacke sowie als polymere Träger für pharmazeutische Wirkstoffe.

## Patentansprüche (Patentansprüche für folgende(n) Vertragsstaat(en): ES)

1. Verfahren zur Herstellung von Acetalen des Polyvinylalkohols (PVAL), deren Makromoleküle Oxoacetaleinheiten der Formel I, 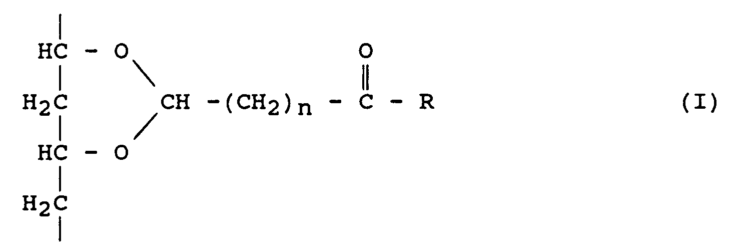 worin
R = (C₁-C₂₀)-Alkyl, vorzugsweise (C₁-C₄)-Alkyl, (C₆-C₂₀)-Aryl, -Aralkyl oder -Alkaryl, vorzugsweise Phenyl, oder (C₅-C₂₀)-Cycloalkyl, vorzugsweise Cyclohexyl, und
n = eine Zahl von 1 bis 10, vorzugsweise 1, bedeuten,
enthalten,
aus PVAL-en und Aldehyden unter Säurekatalyse in wäßrigem oder organischem Medium, dadurch gekennzeichnet, daß man Polyvinylalkohole in wäßrigem Medium oder in wäßrigorganischem Medium oder in organischem Medium unter Zusatz eines Säurekatalysators mit der stöchiometrisch erforderlichen Menge eines Ketoaldehyds der Formel II, 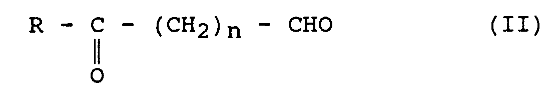 worin R und n die Bedeutung wie in Formel I haben,
oder eines Ketoaldehydacetals der Formel III, 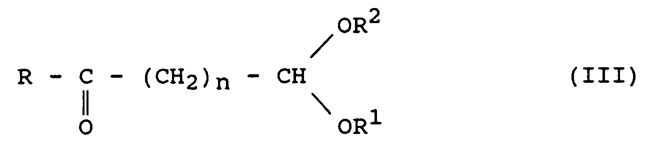 worin R und n die Bedeutung wie in Formel I haben und R¹, R², die gleich oder verschieden sein können, (C₁-C₁₂)-Alkyl, (C₅-C₁₂)-Cycloalkyl, (C₆-C₁₂)-Aryl oder -Alkaryl, bedeuten, sowie gegebenenfalls mit weiteren Aldehyden oder Aldehydacetalen unter Acetalisierungsbedingungen umsetzt und die Polyvinylacetale isoliert.

2. Verfahren nach Anspruch 1, dadurch gekennzeichnet, daß der Gehalt an Ketogruppen (〉C=O) in den resultierenden Polyvinylacetalen mindestens 0,05 Gew.-%, vorzugsweise 0,1 bis 16 Gew.-%, bezogen auf das Gewicht des Polyvinylacetals, beträgt.

3. Verfahren nach Anspruch 1 oder 2, dadurch gekennzeichnet, daß höchstens 86 Mol-%, vorzugsweise bis zu 80 Mol-%, der Vinylalkoholeinheiten des PVAL-s, bezogen auf den Gesamtgehalt an Vinylalkoholeinheiten in dem Ausgangs-PVAL, acetalisiert werden.

4. Verfahren nach einem oder mehreren der Ansprüche 1 bis 3, dadurch gekennzeichnet, daß das Molekulargewicht des Ausgangs-PVAL-s im Bereich von 2000 bis 300000 g/Mol liegt.

5. Verfahren nach einem oder mehreren der Ansprüche 1 bis 4, dadurch gekennzeichnet, daß der Gehalt an Vinylalkoholeinheiten in dem Ausgangs-PVAL mehr als 50 Mol-%, vorzugsweise mehr als 75 Mol-%, bezogen auf die Gesamtmolzahl aller Monomereinheiten in dem Ausgangs-PVAL, beträgt.

6. Verfahren nach einem oder mehreren der Ansprüche 1 bis 5, dadurch gekennzeichnet, daß neben den Ketoaldeyden der Formeln II ubzw. III noch andere Aldehyde mitverwendet werden.

7. Verfahren nach Anspruch 6, dadurch gekennzeichnet, daß ketogruppenfreie Aldehyde aus der Gruppe aliphatischer (C₁-C₂₀)-Aldehyde, aliphatischer (C₂-C₂₀)-Hydroxyaldehyde, aliphatischer (C₂-C₂₀)-Alkoxyaldehyde oder Cycloalkoxyaldehyde, Cyclohexylaldehyd oder Benzaldehyd mitverwendet werden.

8. Verfahren nach einem oder mehreren der Ansprüche 1 bis 7, dadurch gekennzeichnet, daß der Ausgangs-PVAL durch partielle oder vollständige Alkoholyse bzw. Verseifung von Polyvinylestern oder Polyvinylestercopolymerisaten, die Carbonsäurevinylestereinheiten mit 3 bis 20 C-Atomen enthalten, vorzugsweise Polyvinylacetat oder Ethylen/Vinylacetat-Copolymerisaten, erhalten wurde.

9. Verfahren nach einem oder mehreren der Ansprüche 1 bis 8, dadurch gekennzeichnet, daß die resultierenden Polyvinylacetale Carbonsäurevinylestereinheiten mit 3 bis 20 C-Atomen, vorzugsweise Vinylacetateinheiten, enthalten.

10. Verwendung von Polyvinylacetalen, hergestellt nach Ansprüchen 1 bis 9, in Kombination oder in Mischung mit ausgewählten Mengen von Verbindungen aus der Gruppe Hydrazin, monofunktionelle organische Hydrazinderivate, mehrfachfunktionelle organische Hydrazinderivate, monofunktionelle Carbonsäurehydrazide, mehrfachfunktionelle Carbonsäurehydrazide, Hydroxylamin, organische Hydroxylaminderivate, Semicarbazid, organische Semicarbazidderivate, vorzugsweise zur Herstellung von in gelöster oder dispergierter Form anwendbaren vernetzbaren polymeren Bindemitteln für Pressmassen, Lacke, Anstrichfarben, Fasern, Papier, Holzschliff, Beschichtungen, Klebstoffe, korrosionsschützende Decklacke sowie als polymere Träger für pharmazeutische Wirkstoffe.

## Claims (Claims for the following Contracting State(s): AT, BE, CH, DE, FR, GB, IT, LI, NL, SE)

1. Acetals of polyvinyl alcohol (PVAL), the macromolecules of which contain units of the formula I 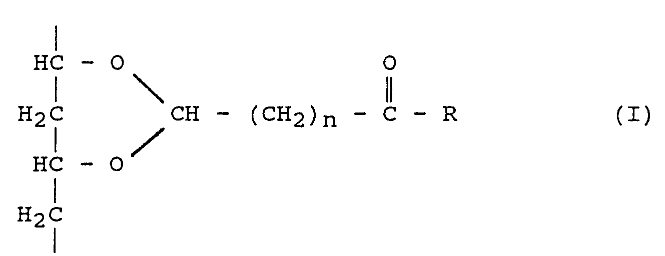 in which
R = (C₁-C₂₀)-alkyl, preferably (C₁-C₄)-alkyl, (C₆-C₂₀)-aryl, -aralkyl or -alkaryl, preferably phenyl, or (C₅-C₂₀)-cycloalkyl, preferably cyclohexyl, and
n = a number from 1 to 10, preferably 1

2. Acetals of PVAL as claimed in claim 1, in which their content of keto groups (〉C=O) is at least 0.05 % by weight, preferably 0.1 to 16 % by weight, based on the weight of the polyvinyl acetal.

3. Acetals of PVAL as claimed in claim 1 or 2, in which not more than 86 mol %, preferably up to 80 mol %, of the vinyl alcohol units of the PVAL, based on the total content of vinyl alcohol units in the starting PVAL, are acetalized.

4. Acetals of PVAL as claimed in one or more of claims 1 to 3, in which the molecular weight of the starting PVAL was in the range from 2000 to 300,000 g/mol.

5. Acetals of PVAL as claimed in one or more of claims 1 to 4, in which the content of vinyl alcohol units in the starting PVAL was more than 50 mol %, preferably more than 75 mol %, based on the total number of moles of all the monomer units in the starting PVAL.

6. Acetals of PVAL as claimed in one or more of claims 1 to 5, which contain, in addition to vinyl acetal units of the formula I, other vinyl acetal units.

7. Acetals of PVAL as claimed in claim 6, which contain vinyl acetal units which contain no keto groups and are derived from the group comprising aliphatic (C₁-C₂₀)-aldehydes, aliphatic (C₂-C₂₀)-hydroxyaldehydes, aliphatic (C₂-C₂₀)-alkoxyaldehydes and cycloalkoxyaldehydes, cyclohexylaldehyde and benzaldehyde.

8. Acetals of PVAL as claimed in one or more of claims 1 to 7, in which the starting PVAL was obtained by partial or complete alcoholysis or hydrolysis of polyvinyl esters or polyinyl ester copolymers which contain carboxylic acid vinyl ester units having 3 to 20 carbon atoms, preferably polyvinyl acetate or an ethylene/vinyl acetate copolymer.

9. Acetals of PVAL as claimed in one or more of claims 1 to 8, which contain carboxylic acid vinyl ester units having 3 to 20 carbon atoms, preferably vinyl acetate units.

10. Process for the preparation of polyvinyl alcohol acetals containing oxoacetal units of the formula I as claimed in claim 1 from PVALs and aldehydes under acid catalysis in an aqueous or organic medium, which comprises reacting polyvinyl alcohols in an aqueous medium or in an aqueous-organic medium or in an organic medium, with addition of an acid catalyst, with the stoichiometrically required amount of a ketoaldehyde od the formula II 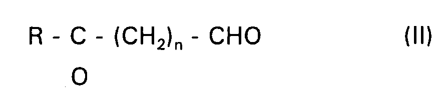 in which R and n have the meaning as in formula I,
or of a ketoaldehyde acetal of the formula III 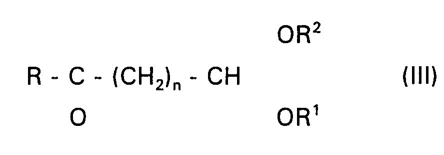 in which R and n have the meaning as in formula I and R¹ and R², which can be identical or different, are (C₁-C₁₂)-alkyl, (C₅-C₁₂)-cycloalkyl or (C₆-C₁₂)-aryl or -alkaryl, and if appropriate with further aldehydes or aldehyde acetals under acetalization conditions, and isolating the polyvinyl acetals.

11. The use of polyvinyl acetals as claimed in claims 1 to 9, or prepared as claimed in claim 10, in combination or as mixtures with selected amounts of compounds from the group comprising hydrazine, monofunctional organic hydrazine derivatives, polyfunctional organic hydrazine derivatives, monofunctional carboxylic acid hydrazides, polyfunctional carboxylic acid hydrazides, hydroxylamine, organic hydroxylamine derivatives, semicarbazide and organic semicarbazide derivatives, preferably for the preparation of crosslinkable polymeric binders, which can be used in dissolved or dispersed form, for compression molding compositions, varnishes, paints, fibers, paper, mechanical wood pulp, coatings, adhesives, corrosion-protective top coats and polymeric carriers for pharmaceutical active compounds.

## Claims (Claims for the following Contracting State(s): ES)

1. Process for the preparation of acetals of polyvinyl alcohol (PVAL), the macromolecules of which contain units of the formula I 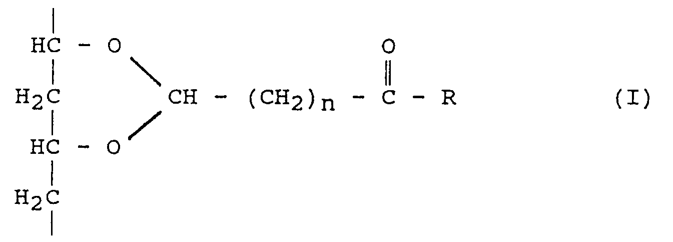 in which
R = (C₁-C₂₀)-alkyl, preferably (C₁-C₄)-alkyl, (C₆-C₂₀)-aryl, -aralkyl or -alkaryl, preferably phenyl, or (C₅-C₂₀)-cycloalkyl, preferably cyclohexyl, and
n = a number from 1 to 10, preferably 1,
from PVALs and aldehydes under acid catalysis in an aqueous or organic medium, which comprises reacting polyvinyl alcohols in an aqueous medium or in an aqueous-organic medium or in an organic medium, with addition of an acid catalyst, with the stoichiometrically required amount of a ketoaldehyde od the formula II 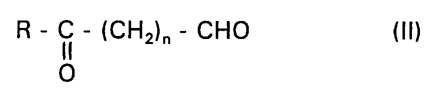 in which R and n have the meaning as in formula I,
or of a ketoaldehyde acetal of the formula III 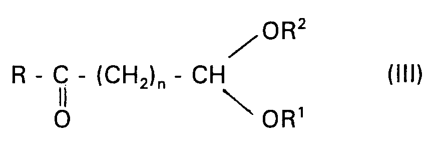 in which R and n have the meaning as in formula I and R¹ and R², which can be identical or different, are (C₁-C₁₂)-alkyl, (C₅-C₁₂)-cycloalkyl or (C₆-C₁₂)-aryl or -alkaryl, and if appropriate with further aldehydes or aldehyde acetals under acetalization conditions, and isolating the polyvinyl acetals.

2. The process as claimed in claim 1, in which the content of keto groups (〉C=O) of the resulting polyvinyl acetals is at least 0.05 % by weight, preferably 0.1 to 16 % by weight, based on the weight of the polyvinyl acetal.

3. The process as claimed in claim 1 or 2, in which not more than 86 mol %, preferably up to 80 mol %, of the vinyl alcohol units of the PVAL, based on the total content of vinyl alcohol units in the starting PVAL, are acetalized.

4. The process as claimed in one or more of claims 1 to 3, in which the molecular weight of the starting PVAL was in the range from 2000 to 300,000 g/mol.

5. The process as claimed in one or more of claims 1 to 4, in which the content of vinyl alcohol units in the starting PVAL was more than 50 mol %, preferably more than 75 mol %, based on the total number of moles of all the monomer units in the starting PVAL.

6. The process as claimed in one or more of claims 1 to 5, wherein in addition to the ketoaldehydes of formula II or III, other aldehydes are used.

7. The process as claimed in claim 6, wherein aldehydes which contain no keto groups and are selected from the group comprising aliphatic (C₁-C₂₀)-aldehydes, aliphatic (C₂-C₂₀)-hydroxyaldehydes, aliphatic (C₂-C₂₀)-alkoxyaldehydes and cycloalkoxyaldehydes, cyclohexylaldehyde and benzaldehyde are co-used.

8. The process as claimed in one or more of claims 1 to 7, in which the starting PVAL was obtained by partial or complete alcoholysis or hydrolysis of polyvinyl esters or polyinyl ester copolymers which contain carboxylic acid vinyl ester units having 3 to 20 carbon atoms, preferably polyvinyl acetate or an ethylene/vinyl acetate copolymer.

9. The process as claimed in one or more of claims 1 to 8, wherein the resulting polyvinyl acetals contain carboxylic acid vinyl ester units having 3 to 20 carbon atoms, preferably vinyl acetate units.

10. The use of polyvinyl acetals prepared as claimed in claims 1 to 9, in combination or as mixtures with selected amounts of compounds from the group comprising hydrazine, monofunctional organic hydrazine derivatives, polyfunctional organic hydrazine derivatives, monofunctional carboxylic acid hydrazides, polyfunctional carboxylic acid hydrazides, hydroxylamine, organic hydroxylamine derivatives, semicarbazide and organic semicarbazide derivatives, preferably for the preparation of crosslinkable polymeric binders, which can be used in dissolved or dispersed form, for compression molding compositions, varnishes, paints, fibers, paper, mechanical wood pulp, coatings, adhesives, corrosion-protective top coats and polymeric carriers for pharmaceutical active compounds.

## Revendications (Revendications pour l'(les) Etat(s) contractant(s) suivant(s): AT, BE, CH, DE, FR, GB, IT, LI, NL, SE)

1. Acétals de poly(alcool vinylique) (PVAL) caractérisés en ce que leurs macromolécules renferment des motifs de formule I : 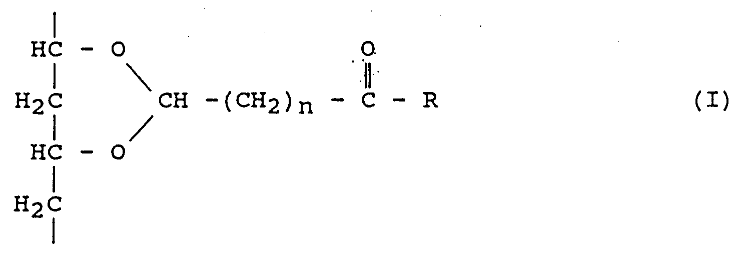 dans laquelle
R = représente un alkyle en C₁-C₂₀, de préférence un alkyle en C₁-C₄, un alcaryle, un aralkyle un ou aryle en C₆-C₂₀, de préférence le phényle, ou un cycloalkyle en C₅-C₂₀, de préférence le cyclohexyle et
n = un nombre de 1 à 10, de préférence 1.

2. Acétals du PVAL selon la revendication 1, caractérisés en ce que leur teneur en groupes céto (〉C=O) est d'au moins 0,05 % en poids, de préférence de 0,1 à 16 % en poids, par rapport au poids du poly(acétal de vinyle).

3. Acétals du PVAL selon la revendication 1 ou 2, caractérisés en ce qu'ils sont acétalisés tout au plus à 86 % en moles, de préférence jusqu'à 80 % en moles des unités d'alcool vinylique du PVAL, par rapport à la teneur totale en unités d'alcool vinylique dans le PVAL du départ.

4. Acétals du PVAL selon une ou plusieurs des revendications 1 ou 3, caractérisés en ce que le poids moléculaire du PVAL de départ est compris entre 2 000 et 300 000 g/mole.

5. Acétals du PVAL selon une ou plusieurs des revendications 1 ou 4, caractérisés en ce que la teneur en motifs d'alcools vinyliques dans le PVAL de départ est supérieure à 50 % en moles, de préférence supérieure à 75 % en moles, par rapport à la quantité totale en nombre de moles de toutes les unités monomères dans le PVAL de départ.

6. Acétals du PVAL selon une ou plusieurs des revendications 1 ou 5, caractérisés en ce qu'ils contiennent outre les motifs d'acétal de vinyle de formule I d'autres motifs d'acétal de vinyle.

7. Acétals du PVAL selon la revendication 6, caractérisés en ce qu'ils contiennent des motifs d'acétal de vinyle sans groupes céto qui dérivent du groupe comportant des aldéhydes aliphatiques en C₁-C₂₀, des hydroxyaldéhydes aliphatiques en C₂-C₂₀, des alcoxyaldéhydes aliphatiques en C₂-C₂₀ ou des cycloalcoxyaldéhydes, l'aldéhyde cyclohexylique et le benzaldéhyde.

8. Acétals du PVAL selon une ou plusieurs des revendications 1 à 7, caractérisés en ce qu'on obtient le PVAL de départ par alcoolyse, ou bien saponification, partielle ou complète des poly(esters de vinyle) ou des copolymères des poly(esters de vinyle) qui renferment des motifs d'esters vinyliques d'acides carboxyliques avec 3 à 20 atomes de carbone, de préférence le poly(acétate de vinyle) ou les copolymères de l'éthylène/acétate de vinyle.

9. Acétals du PVAL selon une ou plusieurs des revendications 1 à 8, caractérisés en ce qu'ils contiennent des motifs d'esters vinyliques d'acides carboxyliques avec 3 à 20 atomes de carbone, de préférence des motifs d'acétate de vinyle.

10. Procédé pour la préparation des acétals du poly(alcool vinylique) renfermant des motifs d'acétals oxo de formule I selon la revendication 1 à partir des PVAL et des aldéhydes sous catalyse acide en milieu aqueux ou organique, caractérisé en ce qu'on fait réagir les poly(alcools de vinyle) en milieu aqueux ou en milieu aqueux-organique ou en milieu organique en ajoutant un catalyseur acide, avec des quantités stoechiométriques d'un cétoaldéhyde de formule II : 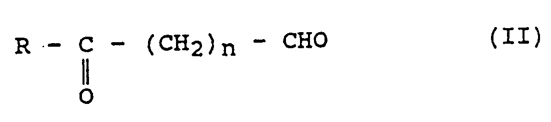 dans laquelle R et n ont la signification donnée dans la formule I,
ou d'un acétal de cétoaldéhyde de formule III : 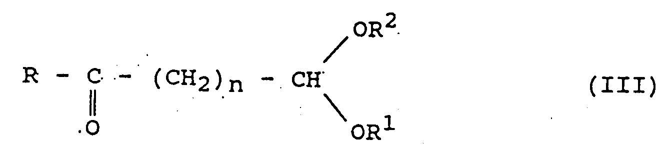 dans laquelle R et n ont les significations données dans la formule I et R¹, R², pouvant être identiques ou différents, représentent alkyle en C₁-C₁₂, cycloalkyle en C₅-C₁₂, alcaryle ou aryle en C₆-C₁₂, ainsi qu'éventuellement avec d'autres aldéhydes ou acétals d'aldéhydes dans des conditions d'acétalisation et on isole les poly(acétals de vinyle).

11. Utilisation des poly(acétals de vinyle) selon les revendications 1 à 9, ou bien préparation selon la revendication 10, en combinaison ou en mélange avec des quantités choisies de composés pris dans le groupe comportant l'hydrazine, des dérivés organiques monofonctionnels d'hydrazine, des dérivés organiques multifonctionnels d'hydrazine, des hydrazides d'acides carboxyliques monofonctionnels, des hydrazides d'acides carboxyliques multifonctionnels, l'hydroxylamine, les dérivés organiques de l'hydroxylamine, le semicarbazide, des dérivés organiques du semicarbazide, de préférence pour la préparation de liants réticulables polymères utilisables sous forme dissoute ou dispersée dans les matières de moulage, les vernis, les enduits, les fibres, les papiers, les pâtes mécaniques, les revêtements, les adhésifs, les vernis protecteurs contre la corrosion ainsi que comme supports polymères de matières actives pharmaceutiques.

## Revendications (Revendications pour l'(les) Etat(s) contractant(s) suivant(s): ES)

1. Procédé pour la préparation des acétals du poly(alcool vinylique) (PVAL) dont les macromolécules renferment des motifs d'acétals oxo de formule I : 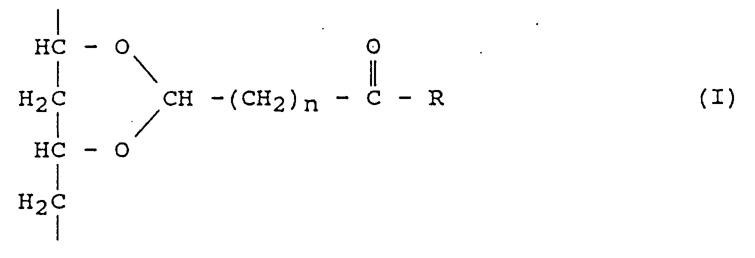 dans laquelle
R = représente un alkyle en C₁-C₂₀, de préférence un alkyle en C₁-C₄, un alcaryle, un aralkyle ou un aryle en C₆-C₂₀, de préférence le phényle, ou un cycloalkyle en C₅-C₂₀, de préférence le cyclohexyle et
n = un nombre de 1 à 10, de préférence 1.
à partir des PVAL et des aldéhydes sous catalyse acide en milieu aqueux ou organique, caractérisé en ce que l'on fait réagir les poly(alcools vinyliques) en milieu aqueux ou en milieu aqueux-organique ou en milieu organique en ajoutant un catalyseur acide, avec des quantités stoechiométriques d'un cétoaldéhyde de formule II : 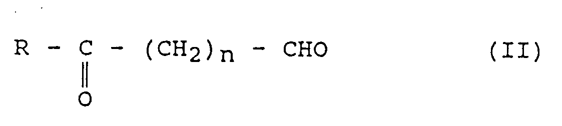 dans laquelle R et n ont les significations données dans la formule I,
ou d'un acétal de cétoaldéhyde de formule III : 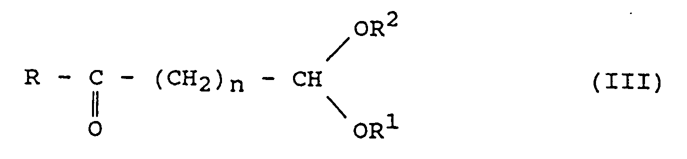 dans laquelle R et n ont les significations données dans la formule I, et R¹, R², pouvant être identiques ou différents, représentent un alkyle en C₁-C₁₂, un cycloalkyle en C₅-C₁₂, un alcaryle ou un aryle en C₆-C₁₂, ainsi qu'éventuellement avec d'autres aldéhydes ou acétals d'aldéhydes dans des conditions d'acétalisation et on isole les poly(acétals de vinyle).

2. Procédé selon la revendication 1, caractérisé en ce que la teneur en groupes céto (〉C=O) dans les poly(acétals de vinyle) finaux est d'au moins 0,05 % en poids, de préférence de 0,1 à 16 % en poids, par rapport au poids du poly(acétal de vinyle).

3. Procédé selon la revendication 1 ou 2, caractérisé en ce que tout au plus à 86 % en moles, de préférence jusqu'à 80 % en moles des motifs d'alcools vinyliques du PVAL, par rapport au poids total de motifs d'alcools vinyliques dans le PVAL du départ, sont acétalisés.

4. Procédé selon une ou plusieurs des revendications 1 ou 3, caractérisé en ce que le poids moléculaire du PVAL de départ est compris entre 2 000 et 300 000 g/mole.

5. Procédé selon une ou plusieurs des revendications 1 ou 4, caractérisé en ce que la teneur en motifs d'alcool vinylique dans le PVAL de départ est supérieure à 50 % en mole, de préférence supérieure à 75 % en modes, par rapport à la quantité totale en nombre de moles de toutes les unités monomères dans le PVAL de départ.

6. Procédé selon une ou plusieurs des revendications 1 ou 5, caractérisé en ce qu'on utilise au côté des cétoaldéhydes de formules II ou bien III encore d'autres aldéhydes.

7. Procédé selon la revendication 6, caractérisé en ce qu'on utilise conjointement des aldéhydes sans groupes céto pris dans le groupe comportant les aldéhydes aliphatiques en C₁-C₂₀, les hydroxyaldéhydes aliphatiques en C₂-C₂₀, les alcoxyaldéhydes aliphatiques en C₂-C₂₀ ou les cycloalcoxyaldéhydes, l'aldéhyde cyclohexylique ou le benzaldéhyde.

8. Procédé selon une ou plusieurs des revendications 1 à 7, caractérisé en ce qu'on obtient le PVAL de départ par alcoolyse, ou bien saponification, partielle ou complète des poly(esters de vinyle) ou des copolymères des poly(esters de vinyle) qui renferment des motifs d'esters vinyliques d'acides carboxyliques avec 3 à 20 atomes de carbone, de préférence le poly(acétate de vinyle) ou les copolymères de l'éthylène/acétate de vinyle.

9. Procédé selon une ou plusieurs des revendications 1 à 8, caractérisé en ce qu'il contient des motifs d'esters vinyliques d'acides carboxyliques avec 3 à 20 atomes de carbone, de préférence des motifs d'acétate de vinyle.

10. Utilisation des poly(acétals de vinyle) selon les revendications 1 à 9, ou bien préparation selon la revendication 10, en combinaison ou en mélange avec des quantités choisies de composés pris dans le groupe comportant l'hydrazine, des dérivés organiques monofonctionnels d'hydrazine, des dérivés organiques multifonctionnels d'hydrazine, des hydrazides d'acides carboxyliques monofonctionnels, des hydrazides d'acides carboxyliques multifonctionnels, l'hydroxylamine, les dérivés organiques de l'hydroxylamine, le semicarbazide, des dérivés organiques du semicarbazide, de préférence pour la préparation de liants réticulables polymères utilisables sous forme dissoute ou dispersée dans les matières de moulage, les vernis, les enduits, les fibres, les papiers, les pâtes mécaniques, les revêtements, les adhésifs, des vernis protecteurs contre la corrosion ainsi que comme supports polymères de matières actives pharmaceutiques.
